# DEMANDE DE BREVET EUROPEEN

(11) **EP 2 996 091 A1**
(43) Date de publication de la demande: **16.03.2016**
(21) Numéro de dépôt: 15382325.7
(22) Date de dépôt: 19.06.2015
(51) Int. Cl.: G07C 9/00

(54) **SERRURE ÉLECTRONIQUE D'IDENTIFICATION PAR RADIOFRÉQUENCE POUR PORTES MÉTALLIQUES**

(30) Priorité: 12.09.2014 ES 201431316
(71) Demandeur: Ojmar S.A., 20870 Elgoibar (Gipuzkoa) (ES)
(72) Inventeur: ZABALA ZABALETA, Jon, 20870 ELGOIBAR (Gipuzkoa) (ES)
(74) Mandataire: Urizar Barandiaran, Miguel Angel

(57) **Abrégé**

Serrure électronique d'identification par radiofréquence, pour portes métalliques ; de celles qui disposent de moyens électroniques avec une puce (C2) et une antenne (a2) qui gouvernent des moyens (3) permettant ou non de déplacer une poignée/bouton (4) de la serrure pour l'ouvrir et la fermer ; et du type de celles qui se servent d'une carte ou autre (par exemple, un bracelet ou un porte-clés) (1) d'ouverture/fermeture disposant de moyens électroniques avec une puce (C1) et une antenne (a1).

L'on dispose de manière concentrique par rapport à la poignée/bouton (4) une plaque-antenne (8) qui se structure en une première couche (81) disposant d'une antenne passive amplificatrice et d'une seconde couche (82) disposant d'une ferrite qui agit comme filtre anti-interférences.

En outre, l'on peut disposer un bouclier non métallique (9) qui, encastré dans les parois métalliques (7) où est située la serrure, intègre intérieurement la dite plaque-antenne (8).

## Description

### Objet de l'invention

L'objet de l'invention se réfère à une serrure électronique d'identification par radiofréquence, pour des portes métalliques.

### Antécédents de l'invention

Dans l'état actuel de la technique, des serrures métalliques, armoires métalliques, portes métalliques ou pour structures métalliques, au moins, dans la zone de la serrure sont connues ; ces serrures disposant de moyens électroniques qui les gouvernent en utilisant une carte d'ouverture/fermeture qui, à cet effet, intègre des moyens électroniques correspondants.

Un problème non résolu dans ce type de serrures dont le fonctionnement se base sur un jeu d'antennes sont les interférences qui se produisent quand elles sont disposées sur des portes métalliques ou des portes métalliques, au moins, dans la zone de la serrure ; car, dans ces cas, la structure métallique même de la porte créé des interférences qui entravent/empéchent que la serrure fonctionne correctement.

Dans l'état actuel de la technique, et quand il est impossible de changer la porte pour toute raison, le problème est résolu partiellement en éliminant les parties métalliques dans la zone de la serrure (par exemple en réalisant un orifice démesurément grand et en le couvrant avec un adhésif, pour maintenir l'esthétique de la porte), mais ce type de solution suppose plus de travail et facilite la manipulation de la serrure, réduisant sa sécurité.

### Description de l'invention

La serrure électronique d'identification par radiofréquence pour portes métalliques objet de l'invention, suppose une solution à ce problème sans affaiblir la zone de la serrure et sans travail supplémentaire sur la structure porteuse de la serrure. La serrure de l'invention est du type de celles qui se servent d'une carte ou autre (par exemple, un bracelet ou un porte-clés) d'ouverture et de fermeture disposant de moyens électroniques avec une première puce et une première antenne et disposant de moyens électroniques avec une seconde puce et une seconde antenne qui gouvernent des moyens permettant ou non le mouvement et le blocage d'une poignée/bouton de la serrure pour l'ouvrir/la fermer, qui se caractérise par le fait que l'on dispose de manière concentrique par rapport à la poignée/bouton une plaque/antenne et qui se structure en une première couche disposant d'une antenne passive amplificatrice et d'une seconde couche disposant d'une ferrite anti-interférences.

Cette plaque-antenne pourvue de la dite seconde couche porteuse de ferrite agit comme un filtre anti-interférences, en annulant les interférences générées par la porte métallique où est placée la serrure, étant donné que la ferrite est un matériau commun utilisé dans de nombreuses applications pour minimiser les interférences électromagnétiques.

À partir de cette conception basique, toutes les réalisations n'altérant, ni ne changeant ou ne modifiant pas le fondement proposé sont incluses dans l'objet de l'invention. Par exemple, le fait de disposer un bouclier non métallique, lequel, encastré dans les parois métalliques de la porte métallique où est située la serrure, intègre intérieurement la dite plaque-antenne qui contient la ferrite, est inclus dans l'objet de l'invention.

D'autres configurations et avantages de l'invention peuvent être déduits à partir de la description suivante et des revendications dépendantes.

### Description des dessins

Pour mieux comprendre l'objet de l'invention, une forme préférentielle de réalisation, pouvant recevoir des changements accessoires ne dénaturant pas son fondement est représentée sur les figures jointes. Dans ce cas :

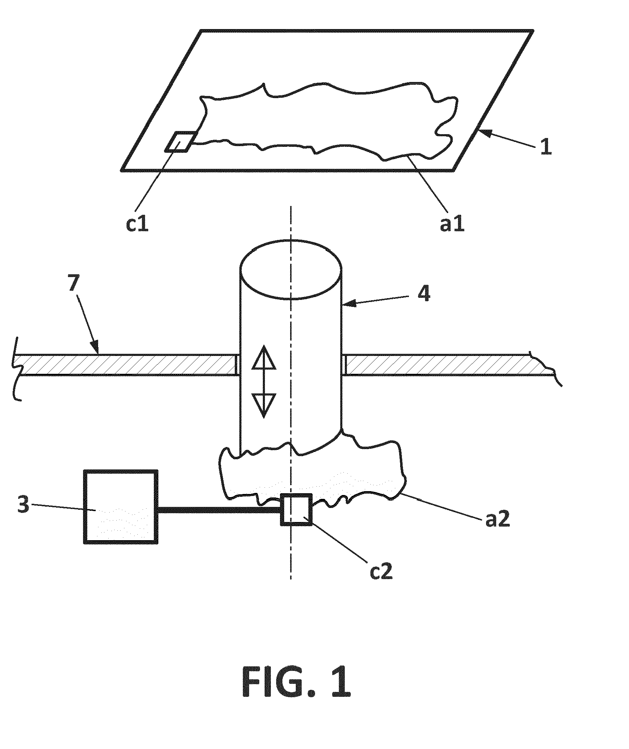

La figure 1 représente un schéma général des composants d'une serrure, et sa carte d'ouverture/fermeture (1) associée, disposés dans une porte métallique (7) selon une solution connue.

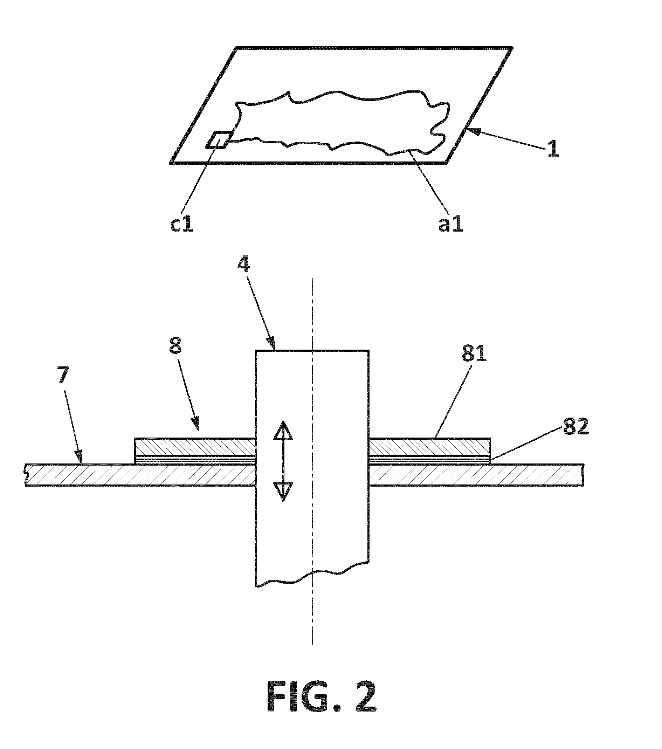

La figure 2 représente un schéma général en coupe des composants d'une serrure, et sa carte d'ouverture/fermeture (1) associée, disposés dans une porte métallique (7), selon l'invention.

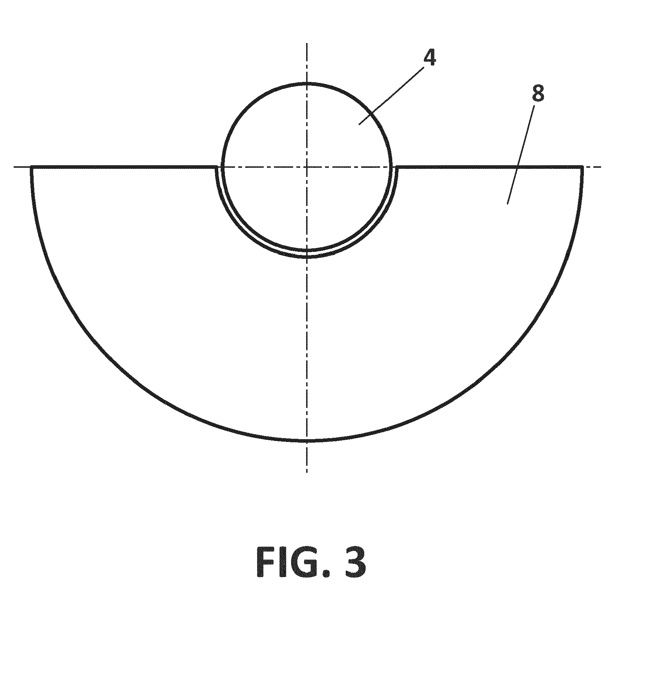

La figure 3 représente un schéma partiel en plan, correspondant à la figure 2.
La figure 4 représente un schéma général en coupe, selon l'invention, semblable à la figure 2, pour une configuration alternative incluant un bouclier non métallique (9).

### Description d'une réalisation préférentielle

Ci-dessous est décrit un exemple de réalisation pratique de la présente invention, cette réalisation n'étant pas limitative. D'autres modes de réalisation introduisant des changements accessoires ne dénaturant pas le fondement de l'invention ne sont absolument pas écartés.

L'objet de l'invention est une serrure électronique d'identification par radiofréquence pour portes métalliques.

Dans une configuration connue, ce type de serrures se servent d'une carte ou autre (par exemple, un bracelet ou un porte-clés) (1) d'ouverture/fermeture pourvus de moyens électroniques avec une puce (C2) et une antenne (a2) qui gouvernent des moyens (3) permettant ou non de déplacer ou de bloquer la poignée/bouton (4) de la serrure pour l'ouvrir et la fermer en les activant avec la carte (1) correspondante.

Conformément à l'invention, l'on dispose de manière concentrique à la poignée bouton (4) une plaque-antenne (8) qui se structure en une première couche (81) portant une antenne amplificatrice et une seconde couche (82) portant une ferrite qui agit comme filtre anti-interférences.

La ferrite disposée dans la seconde couche (82) est un matériau utilisé généralement dans de nombreuses applications pour minimiser les interférences électromagnétiques.

L'antenne passive amplificatrice disposée dans la couche (81) est positionnée devant la propre porte métallique (7) de manière à ce que, en approchant la carte (1) correspondante, cette antenne amplificatrice capte son signal et le transmet pour activer les moyens (3), en minimisant les interférences électromagnétiques grâce à l'action de la ferrite disposée dans la seconde couche (82).

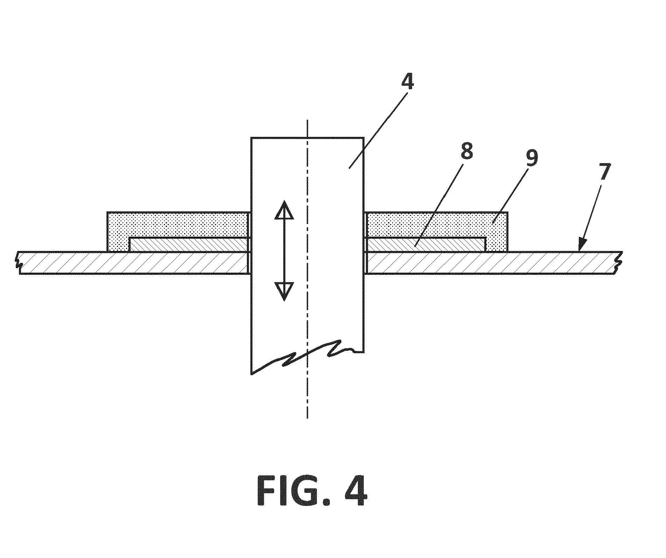

De plus, et, conformément à l'invention, il est possible de disposer un bouclier non métallique (9) encastré dans les parois métalliques (7) où est située la serrure, de manière à ce que ce bouclier non métallique (9) recouvre la plaque-antenne (8), de manière à ce que l'on voit de l'extérieur uniquement le bouclier non métallique (9) même. Voir figure 4.

Les matériaux, dimensions, proportions, et, en général, tous les autres détails accessoires ou secondaires n'altérant, ni ne changeant ou ne modifiant pas le fondement proposé pourront être variables.

Les termes dans lesquels est rédigé ce mémoire sont certains et reflètent fidèlement l'objet décrit, et doivent être entendus dans leur sens le plus ample, et cela jamais de forme limitative.

## Revendications

1. Serrure électronique d'identification par radiofréquence, pour portes métalliques ; de celles qui disposent de moyens électroniques avec une puce (C2) et une antenne (a2) qui gouvernent des moyens (3) permettant ou non de déplacer ou de bloquer une poignée/bouton (4) de la serrure pour l'ouvrir et la fermer ; et du type de celles qui se servent d'une carte ou autre (par exemple, un bracelet ou un porte-clés) (1) d'ouverture/fermeture disposant de moyens électroniques avec une puce (C1) et une antenne (a1); **caractérisée par le fait que** l'on dispose de manière concentrique par rapport à la poignée/bouton (4) une plaque-antenne (8) qui se structure en une première couche (81) disposant d'une antenne passive amplificatrice et d'une seconde couche (82) disposant d'une ferrite qui agit comme filtre anti-interférences.

2. Serrure électronique d'identification par radiofréquence, pour portes métalliques, selon revendication 1, **caractérisée par le fait que** l'on dispose un bouclier non métallique (9) qui, encastré dans les parois métalliques (7) où est située la serrure, intègre intérieurement la plaque-antenne (8).
